# EUROPÄISCHE PATENTANMELDUNG

(11) **EP 2 096 023 A2**
(43) Veröffentlichungstag der Anmeldung: **02.09.2009**
(21) Anmeldenummer: 09152643.4
(22) Anmeldetag: 12.02.2009
(51) Int. Cl.: B62K 11/08, B62K 19/30, B62M 7/02

(54) **Trägerstruktur für ein einen Elektroantrieb aufweisendes Motorrad**

(30) Priorität: 29.02.2008 DE 102008011851
(71) Anmelder: Christ, Markus, 87700 Memmingen (DE)
(72) Erfinder: Christ, Markus, 87700 Memmingen (DE)
(74) Vertreter: Peckmann, Ralf

(57) **Zusammenfassung**

Die vorliegende Erfindung schafft eine Trägerstruktur (2) für ein einen Elektroantrieb (15, 16, 23) aufweisendes Motorrad (1), mit einem Gehäuse (7), welches Gehäusewände (32, 33, 34, 35, 35a) zur fremdpartikelgeschützten Aufnahme mindestens einer Antriebskomponente (15, 16, 23) des Elektroantriebs aufweist; und Tragmittel (5, 6, 9A, 14) zum Tragen einer Vorderradanordnung (3), einer Hinterradanordnung und eines Fahrers, wobei die Gehäusewände (32, 33, 34, 35, 35a) des Gehäuses (7) zum Leiten eines Kraftflusses zwischen den Tragmitteln (5, 6, 14, A) ausgebildet sind.

## Beschreibung

Die vorliegende Erfindung bezieht sich auf eine Trägerstruktur für ein einen Elektroantrieb aufweisendes Motorrad sowie auf ein Motorrad mit einer derartigen Trägerstruktur.

Obwohl auf beliebige Motorräder anwendbar, werden die vorliegende Erfindung sowie die ihr zugrunde liegende Problematik in Bezug auf ein Motocross-Motorrad näher erläutert.

Motocross-Motorräder mit Elektroantrieb erfreuen sich zunehmender Beliebtheit wegen der von ihnen ausgehenden, im Vergleich zu Motorcross-Motorrädern mit Verbrennungsantrieb stark verringerten Lärmbelästigung sowie auch wegen des Umstands, dass Motocross-Motorräder mit Elektroantrieb abgasfrei sind. Außerdem weisen Motocross-Motorräder mit Elektroantrieb ein sehr hohes Drehmoment insbesondere in niedrigen Drehzahlbereichen auf, was einen großen Fahrspaß mit sich bringt.

Bisherige Motocross-Motorräder weisen eine Trägerstruktur auf, welche im Wesentlichen aus Aluminiumprofilen besteht, die zum Bilden eines Rahmens geeignet zusammengeschweißt sind. An diesem Rahmen sind Schutzbleche angeschraubt, um Fremdpartikel, wie beispielsweise Staub, von den Antriebskomponenten des Elektroantriebs, wie beispielsweise einem Batteriepaket oder einem Elektromotor, die in dem Rahmen befestigt vorgesehen sind, abzuhalten.

Dabei hat es sich als nachteilig herausgestellt, dass die angeschraubten Schutzbleche eine nur ungenügende Abdichtung gewährleisten, da Spalte zwischen diesen kaum vollständig abgedichtet werden können.

Es ist daher Aufgabe der vorliegenden Erfindung, eine verbesserte Trägerstruktur für ein einen Elektroantrieb aufweisendes Motorrad und/oder ein Motorrad mit einer derartigen Trägerstruktur bereitzustellen, welche bzw. welches einen verbesserten Schutz der Antriebskomponenten des Elektroantriebs gegenüber Fremdpartikeln aufweist.

Erfindungsgemäß wird diese Aufgabe durch eine Trägerstruktur mit den Merkmalen des Patentanspruchs 1 und/oder durch ein Motorrad mit den Merkmalen des Patentanspruchs 14 gelöst.

Demgemäß wird eine Trägerstruktur für ein einen Elektroantrieb aufweisendes Motorrad bereitgestellt. Diese Trägerstruktur weist ein Gehäuse auf, welches mit Gehäusewänden zur fremdpartikelgeschützten Aufnahme mindestens einer Antriebskomponente des Elektroantriebs versehen ist. Ferner weist die Trägerstruktur Tragmittel zum Tragen einer Vorderradanordnung, einer Hinterradanordnung und eines Fahrers auf, wobei die Gehäusewände des Gehäuses zum Leiten eines Kraftflusses zwischen den Tragmitteln ausgebildet sind.

Ferner wird ein Motorrad mit einer derartigen Trägerstruktur bereitgestellt.

Die der vorliegenden Erfindung zugrundeliegende Idee besteht darin, dass die Trägerstruktur mit Gehäusewänden gebildet wird, welche eine Dualfunktion erfüllen: einerseits schützen sie die mindestens eine Antriebskomponente vor Fremdpartikeln und andererseits leiten sie auch einen Kraftfluss, welcher sich beispielsweise aus der auf das Motorrad bzw. den Fahrer wirkenden Schwerkraft und/oder wirkender Beschleunigungen, insbesondere während der Fahrt, ergeben, zwischen den Tragmitteln und fixieren diese somit in ihrer relativen Position zueinander.

Somit lassen sich gegenüber dem beschriebenen bekannten Ansatz die beschriebenen Schutzbleche einsparen, was zum einen zu einer weniger komplexen Trägerstruktur und zum anderen zu einer leichteren Trägerstruktur führt. Vor allem aber ist die wenigstens eine Antriebskomponente besser vor Fremdpartikeln geschützt zwischen den Gehäusewänden aufgenommen, als dies im Wege der bekannten Schutzbleche realisiert werden kann.

In den Unteransprüchen finden sich vorteilhafte Ausgestaltungen und Verbesserungen der Erfindung.

Unter einem "Motorrad" ist vorliegend vorzugsweise jede Art von Zweirad oder Dreirad zu verstehen, welches insbesondere keine geschlossene Fahrerkabine aufweist.

Unter "Gehäusewänden" soll vorliegend auch eine einzige zusammenhängende Gehäusewand subsumiert sein. Unter "Gehäusewänden" sollen vorliegend flächige Elemente zu verstehen sein. Diese umgeben die mindestens eine Antriebskomponente wenigstens teilweise, vorzugsweise im Wesentlichen vollständig.

Mit "fremdpartikelgeschützt" soll vorliegend ein vollständiger Schutz vor Fremdpartikeln (d.h. Schmutz, Staub und/oder Feuchtigkeit) wie auch ein wenigstens teilweiser Schutz vor Fremdpartikeln gemeint sein.

Gemäß einer bevorzugten Weiterbildung der erfindungsgemäßen Trägerstruktur ist eine als Batteriepaket ausgebildete Antriebskomponente derart anordbar, dass sie mit einem ersten Abschnitt in dem Gehäuse angeordnet ist und sich mit einem zweiten Abschnitt durch eine Aussparung in dem Gehäuse unter ein als Sitz ausgebildeten Tragmittel für den Fahrer erstreckt. Somit können auch vergleichweise große Batteriepakete von dem Gehäuse wenigstens teilweise fremdpartikelgeschützt aufgenommen werden. Mit einem "Batteriepaket" sind vorliegend insbesondere Akkus, beispielsweise Lithium-Ionen-Akkus, gemeint.

Gemäß einer weiter bevorzugten Weiterbildung der erfindungsgemäßen Trägerstruktur weist der Sitz einen Hohlraum auf, in welchen sich das Batteriepaket hinein erstreckt. Bei dieser Weiterbildung ist das Batteriepaket vollständig von dem Sitz und den Gehäusewänden des Gehäuses umgeben und somit sehr gut vor Fremdpartikeln geschützt. Ferner ist diese Weiterbildung sehr platzsparend.

Gemäß einer weiter bevorzugten Weiterbildung der erfindungsgemäßen Trägerstruktur ist eine weitere, als Batteriepaket ausgebildete Antriebskomponente vollständig von den Gehäusewände des Gehäuses umgeben aufnehmbar. Somit ist das weitere Batteriepaket sehr gut vor Fremdpartikeln geschützt. Die Idee, die Antriebsenergie auf zwei separate Batteriepakete zu verteilen, erlaubt es diese jeweils mit einer handhabbareren Größe auszubilden, wodurch sich diese dann auch einfacher in dem Gehäuse bzw. in der Trägerstruktur verstauen lassen. Die Batteriepakete weisen vorzugsweise eine quaderförmige Gestalt auf.

Gemäß einer weiter bevorzugten Weiterbildung der erfindungsgemäßen Trägerstruktur ist der Sitz abnehmbar und/oder verschwenkbar an dem Gehäuse angebracht, wobei ein Zugang zu dem Batteriepaket und/oder dem weiteren Batteriepaket freigebbar ist. Damit ist ein sehr einfacher Austausch der Batteriepakete möglich.

Gemäß einer weitere bevorzugten Weiterbildung der erfindungsgemäßen Trägerstruktur weist das Gehäuse an einem ersten Ende im Bereich des Tragmittels für die Vorderradanordnung eine erste Öffnung und/oder an einem zweiten Ende im Bereich des Tragmittels für die Hinterradanordnung, vorzugsweise im Bereich einer Aufnahme für eine als Elektromotor ausgebildete Antriebskomponente, eine zweite Öffnung auf, wobei vorzugsweise ein Lüfter vorgesehen ist, mittels welchem ein Luftstrom durch die erste und/oder zweite Öffnung und/oder von der ersten zur zweiten Öffnung erzeugbar ist. Der erzeugte Luftstrom führt dann beispielsweise Kohlenstoffstaub nach außerhalb des Gehäuses, welcher beim Verschleiß von Kohlebürsten des Elektromotors entsteht und/oder kühlt die mindestens eine Antriebskomponente, insbesondere den Elektromotor und/oder die Batteriepakete. Bevorzugt sind die erste und/oder zweite Öffnung mit jeweils einem Luftfilter verschlossen, welcher ein Eindringen von Fremdpartikeln durch die erste und/oder zweite Öffnung verhindert.

Gemäß einer weiter bevorzugten Weiterbildung der erfindungsgemäßen Trägerstruktur weist das Gehäuse in etwa die äußere Gestalt eines rechtwinkligen Dreieckzylinders auf, wobei die Tragmittel für die Vorderrad- und Hinterradanordnung an in etwa gegenüberliegenden Enden der Seite vorgesehen sind, welche der Hypotenuse des Dreieckzylinders zugeordnet ist. Dies erlaubt eine für den Fahrbetrieb geeignete Anordnung der Vorderrad- und Hinterradanordnung wie auch des Sitzes und von Fußrasten für den Fahrer.

Gemäß einer weiter bevorzugten Weiterbildung der erfindungsgemäßen Trägerstruktur erstreckt sich der Sitz von in etwa dem Ende der Seite, welche der Hypotenuse des Dreieckzylinders zugeordnet ist, zu in etwa der Mitte der Seite und ist an dieser angebracht. Damit ergibt sich eine für den Fahrer günstige Anordnung des Sitzes.

Gemäß einer weiter bevorzugten Weiterbildung der erfindungsgemäßen Trägerstruktur ist ein als Fußrasten ausgebildetes Tragmittel für den Fahrer an dem Ende des Dreieckzylinders vorgesehen, welche der Hinterradanordnung zugeordnet ist. Auch dies ist für den Fahrer günstig.

Gemäß einer weiter bevorzugten Weiterbildung der erfindungsgemäßen Trägerstruktur ist eine als Elektromotor ausgebildete Antriebskomponente wenigstens teilweise innerhalb des Endes des Dreieckzylinders vorgesehen, welches der Hinterradanordnung zugeordnet ist. Somit liegt auch der Elektromotor wenigstens teilweise fremdpartikelgeschützt innerhalb des Gehäuses.

Gemäß einer weiter bevorzugten Weiterbildung der erfindungsgemäßen Trägerstruktur weisen die Tragmittel für die Hinterradanordnung ein Lager für die Hinterradschwinge und/oder einen Ansatzpunkt für einen Stoßdämpfer auf und/oder die Tragmittel für die Vorderradanordnung ein Lager für einen Vorderradlenker auf. Somit lassen sich die für ein Motorrad üblichen Funktionen einfach realisieren.

Gemäß einer weiter bevorzugten Weiterbildung sind die Gehäusewände des Gehäuses aus mehreren miteinander verbundenen, insbesondere zusammengeschweißten, Blechen ausgebildet. Ein derartiges Gehäuse lässt sich einfach herstellen. Bevorzugt sind die Bleche aus Aluminium bzw. einer Aluminiumlegierung ausgebildet. Gemäß einer weiter bevorzugten Weiterbildung der erfindungsgemäßen Trägerstruktur sind die Gehäusewände des Gehäuses aus einem Kunststoff, insbesondere einem Faserverbundwerkstoff, ausgebildet. Beispielsweise kann es sich bei dem Faserverbundwerkstoff um einen Kohlenstofffaserverbundwerkstoff handeln, welcher vorzugsweise außenseitig, also an der Seite, die Steinschlag ausgesetzt ist, mit einem Glasfaserverbundwerkstoff beschichtet, um so die Zähigkeit des Gehäuses, insbesondere gegenüber Steinschlag, zu erhöhen.

Bevorzugt ist das Gehäuse einstückig ausgebildet, d.h., dass das Gehäuse einen stoffschlüssigen Verbund darstellt. Weiter bevorzugt sind die Gehäusewände einstückig ausgebildet, d.h., dass die Gehäusewände einen stoffschlüssigen Verbund darstellen. In diesem Zusammenhang sei angemerkt, dass das Gehäuse aus den Gehäusewänden und weiteren Teilen bestehen kann.

Die Erfindung wird im Folgenden anhand eines Ausführungsbeispiels unter Bezugnahme auf die beiliegenden Figuren näher erläutert.

### Von den Figuren zeigen:

- Fig. 1: in einer perspektivischen Ansicht von schräg vorne ein Motorrad gemäß dem Ausführungsbeispiel;
- Fig. 2: in einer perspektivischen Ansicht von schräg hinten das Motorrad aus Fig. 1;
- Fig. 3: einen Längsschnitt des Motorrads aus Fig. 1;
- Fig. 4: in einer perspektivischen Ansicht von schräg oben das Motorrad aus Fig. 1;
- Fig. 5: in einer perspektivischen Ansicht eine Trägerstruktur des Motorrads aus Fig. 1; und
- Fig. 6: in einer perspektivischen Schnittansicht die Trägerstruktur aus Fig. 5.

In den Figuren bezeichnen gleiche Bezugszeichen gleiche oder funktionsgleiche Komponenten, soweit nichts Gegenteiliges angegeben ist.

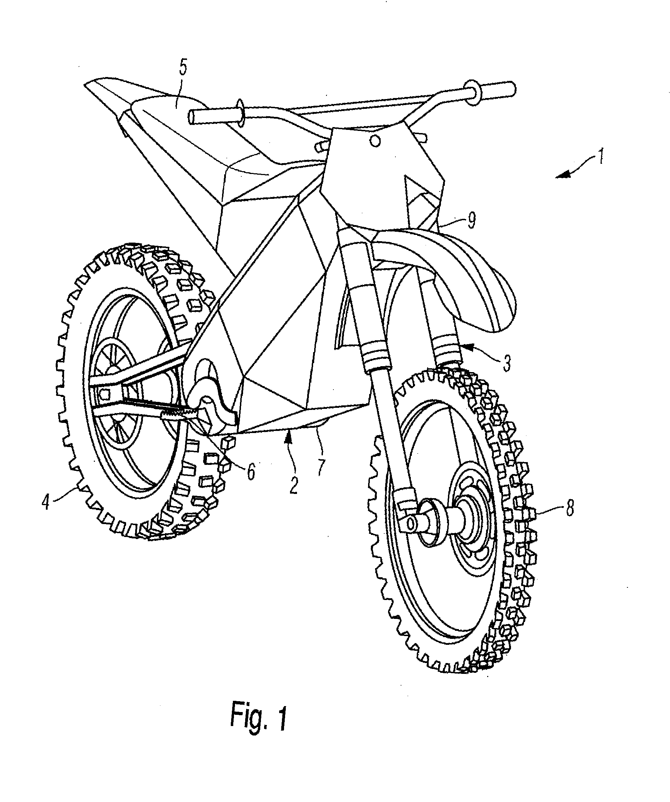

Fig. 1 zeigt in einer perspektivischen Ansicht von schräg vorne ein Cross-Country-Motorrad 1 (im Weiteren als Motorrad bezeichnet) gemäß einem bevorzugten Ausführungsbeispiel der Erfindung.

Das Motorrad 1 weist eine Trägerstruktur 2 sowie Tragmittel zum Tragen - unter anderem - einer Vorderradanordnung 3 und einer Hinterradanordnung 4 auf. Die Tragmittel für die Vorderradanordnung 3 und Hinterradanordnung 4 werden an späterer Stelle näher erläutert. Die Tragmittel umfassen weiterhin Tragmittel zum Tragen eines Fahrer, welche als Sitz 5 und Fußrasten 6 ausgebildet sind. Die Tragmittel für die Vorderradanordnung 3, die Hinterradanordnung 4, den Sitz 5 und die Fußrasten 6 sind gemäß dem vorliegenden Ausführungsbeispiel jeweils mit einem Gehäuse 7 fest verbunden.

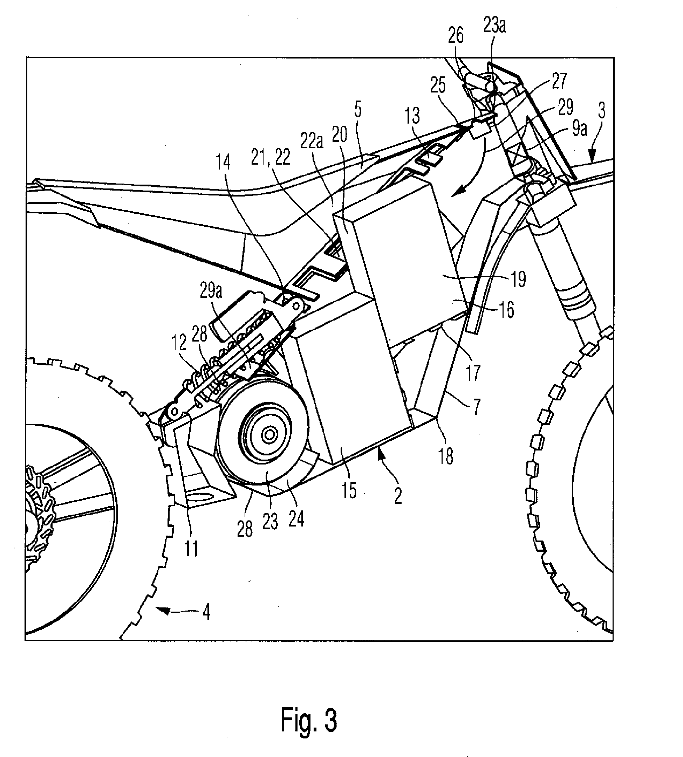

Die Vorderradanordnung 3 umfasst ein Vorderrad 8, welches an einem Vorderradlenker 9 gelagert ist, wobei der Vorderradlenker 9 wiederum mittels eines Lagers 9a (s. Fig. 3) an dem Gehäuse 7 angebracht ist.

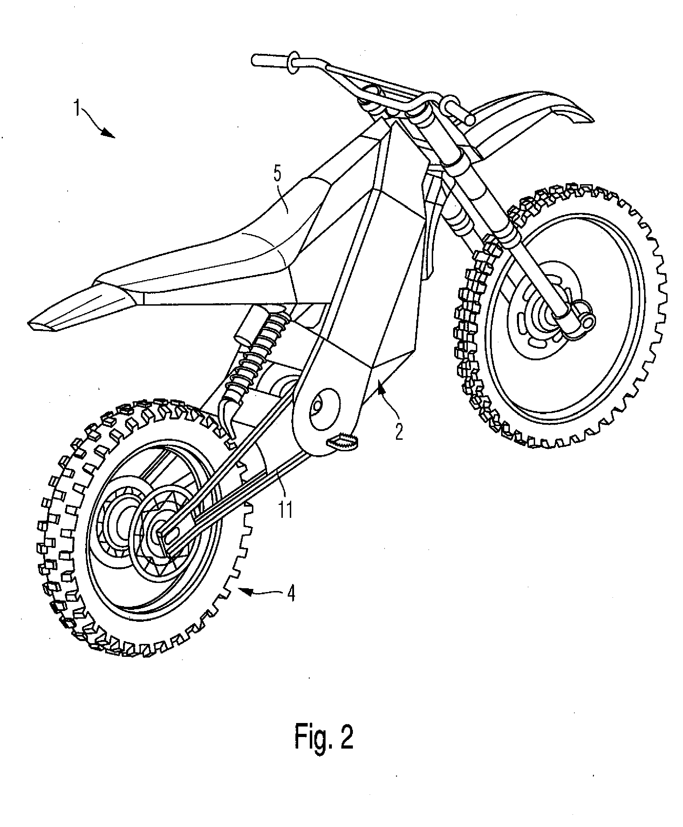

Fig. 2 zeigt eine perspektivische Ansicht des Motorrads aus Fig. 1 von schräg hinten. Dabei ist die Hinterradanordnung 4 gut zu erkennen.

Die Hinterradanordnung 4 umfasst ein Hinterrad 10, welches an einer Hinterradschwinge 11 gelagert ist, die wiederum an einem nicht näher dargestellten Tragmittel der Trägerstruktur 2, beispielsweise einem Lager, schwenkbar angebracht ist. Die Hinterradanordnung 4 weist weiterhin einen Stoßdämpfer 12 auf, welcher an seinem einen Ende an der Hinterradschwinge 11 und an seinem anderen Ende an einem Ansatzpunkt 14 (s. Fig. 3) an der Trägerstruktur 2 angebracht ist.

Fig. 3 zeigt in einer Längsschnittansicht das Motorrad 1 aus Fig. 1.

Aus dem Längsschnitt aus Fig. 3 lässt sich, insb. in Zusammenschau mit der Ansicht aus Fig. 1, die in etwa dreieckszylindrische Gestalt des Gehäuses 7 erkennen. An seiner langen Seite 13 (entspricht der Seite, welche der Hypotenuse des Dreieckzylinders zugeordnet ist) weist die Trägerstruktur 2 den bereits vorstehend beschriebenen Ansatzpunkt 14 für den Stoßdämpfer 12 auf, welcher ein Tragmittel der Trägerstruktur 2 zum Tragen der Hinterradanordnung 4 bildet.

Vorzugsweise ist der Sitz 5 an dem Gehäuse 7, insbesondere an der langen Seite 13, lösbar befestigbar vorgesehen. Besonders bevorzugt ist der Sitz 5 an einem Anlenkpunkt 25 an dem Gehäuse 7 schwenkbar angelenkt.

In dem Gehäuse 7 sind zwei Batteriepakete 15, 16 angeordnet. Das Batteriepaket 15 ist vollständig innerhalb des Gehäuses 7 angeordnet und somit dort weitestgehend vor Fremdpartikeln geschützt untergebracht.

Das Batteriepaket 16 steht auf einem Winkel 17, welcher in der der langen Seite 13 gegenüberliegenden Ecke 18 des Gehäuses 7 angeordnet ist. Das Batteriepaket 16 weist einen ersten Abschnitt 19, mit welchem es innerhalb des Gehäuses 7 angeordnet ist, und einen zweiten Abschnitt 20 auf, mit welchem es sich durch eine Öffnung 21 in dem Gehäuse 7 unter den Sitz 5 erstreckt. Der Sitz 5 ist vorzugsweise als eine im Wesentlichen geschlossene Haut ausgebildet, welche lediglich im Bereich der langen Seite 13 des Gehäuses 7 eine Öffnung 22 aufweist, so dass sich der zweite Abschnitt 20 des Batteriepakets 16 in den gebildeten Hohlraum 22a hinein erstreckt. Damit ist auch das zweite Batteriepaket 16 sehr gut vor Fremdpartikeln geschützt untergebracht.

Mittels der Batteriepakete 15, 16 ist ein Strom an einen Elektromotor 23 lieferbar, welcher das Hinterrad antreibt, in einer Aufnahme 24 des Gehäuses 7 angeordnet und vorzugsweise an seinem Umfang wenigstens abschnittsweise von dem Gehäuse 7 umgeben ist. Damit ist auch der Motor 23 gut vor Fremdpartikeln geschützt untergebracht. Ein nicht dargestelltes Motorsteuergerät und gegebenenfalls weitere Komponenten des elektrischen Antriebs sind vorzugsweise ebenfalls innerhalb des Gehäuses 7 angeordnet.

Vorzugsweise weist die Trägerstruktur 2 entlang ihrer langen Seite 13, im Bereich eines Endes 23a der Trägerstruktur 2 nahe der Vorderradanordnung 3 eine erste Öffnung 26 auf, die mit einem nicht weiter dargestellten Luftfilter verschlossen ist. Ein Lüfter 27 ist innerhalb des Gehäuses 7 vorgesehen, welcher Frischluft durch die Öffnung 26 ansaugt und in das Gehäuse 7 pumpt. Der so erzeugte Luftstrom 29 fließt an den Antriebskomponenten, wie beispielsweise den Batteriepaketen 15, 16 und dem Elektromotor 23 vorbei, kühlt diese und nimmt eventuell noch Kohlenstoffstaub, welcher durch Abrieb der Kohlebürsten des Elektromotors 23 entsteht, mit und fließt durch Öffnungen 28 im Bereich eines Endes 29a der Trägerstruktur 2 nahe der Hinterradanordnung 4, vorzugsweise benachbart zu dem Elektromotor 23, aus dem Gehäuse 7 heraus.

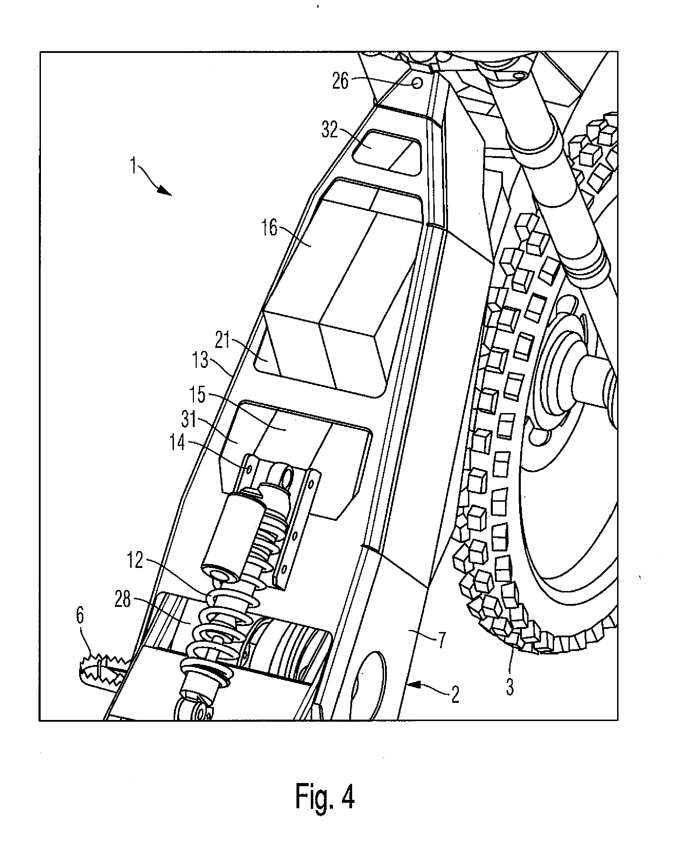

Aus Fig. 4, welche perspektivisch von schräg oben das Motorrad 1 bei abgenommenem Sitz 5 zeigt, lassen sich die Öffnungen 21, 26 und 28 gut erkennen. Auch zu erkennen ist, dass die lange Seite 13 in dem Bereich, in welchem sie von dem Sitz 5 abgedeckt wird, weitere Öffnungen 31 und 32 aufweist, um das Gewicht der Trägerstruktur 2 zu reduzieren.

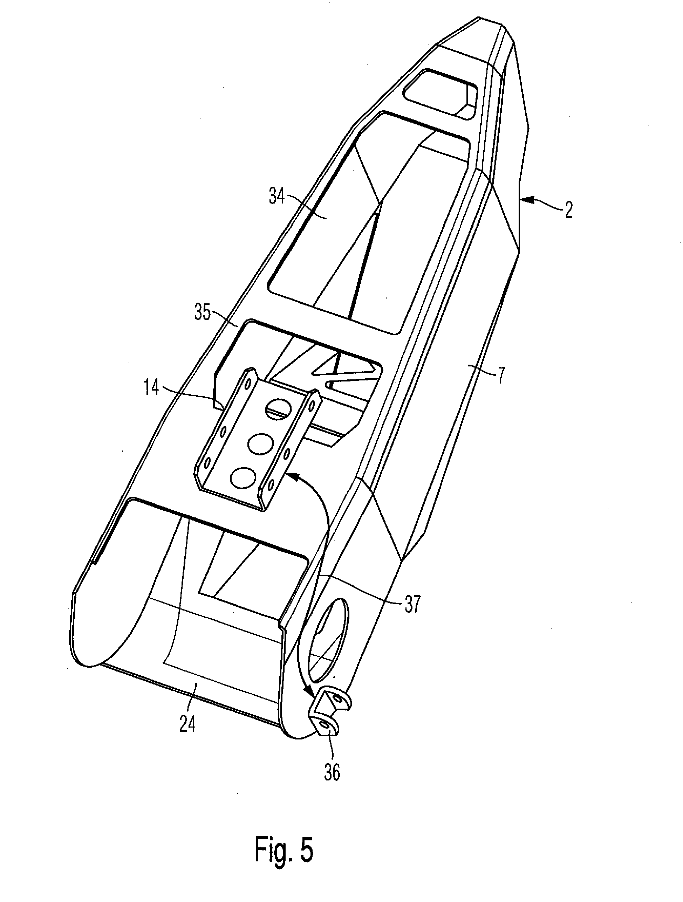

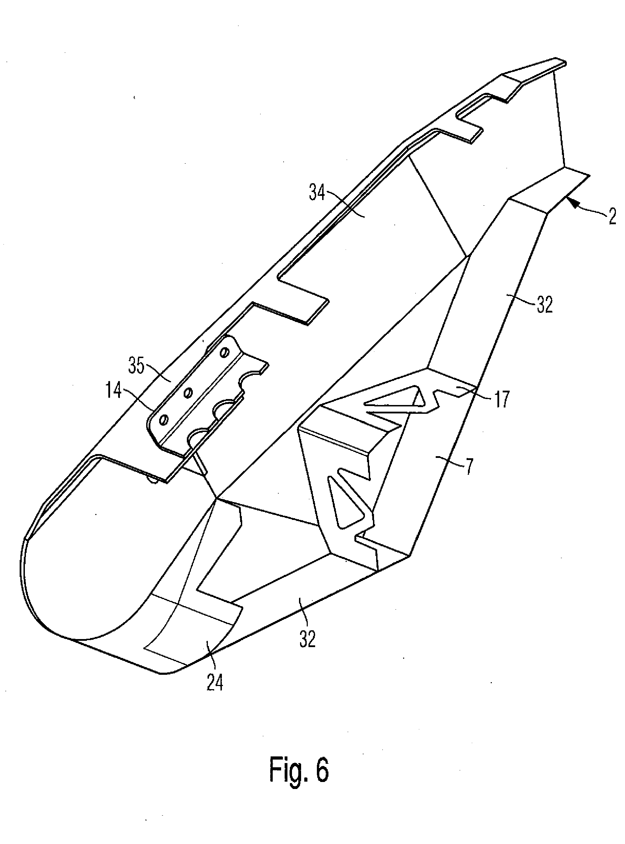

Im Zusammenhang mit den Fig. 5 und 6, welche eine perspektivische Ansicht von oben der Trägerstruktur 2 bzw. einen Längsschnitt durch die Trägerstruktur 2 zeigen, soll der Aufbau der Trägerstruktur 2 näher erläutert.

Das Gehäuse 7 der Trägerstruktur 2 setzt sich gemäß dem vorliegenden Ausführungsbeispiel aus mehreren aneinander geschweißten Aluminiumblechen (beispielhaft mit den Bezugszeichen 32, 33, 34, 35, 35a bezeichnet), welche Gehäusewände des Gehäuses 7 bilden.

Alternativ könnte das Gehäuse 7 auch aus einem Faserverbundkunststoff, welcher beispielsweise im Laminierverfahren hergestellt ist, gefertigt sein. Weiterhin alternativ könnte das Gehäuse 7 auch aus einem Kunststoffgussteil gefertigt sein.

An dem Gehäuse 7 sind, wie bereits vorstehend beschrieben, die Tragmittel, beispielsweise der Ansatzpunkt 14 und eine Aufnahme 36 für die Fußraste 7, befestigt. Die weiteren Tragmittel, beispielsweise das Lager 9a für die Vorderradanordnung 3 sind aus Gründen der Übersichtlichkeit nicht dargestellt worden. Wie in Fig. 6 illustriert, sind die Aufnahme 24 für den Elektromotor 23 wie auch der Winkel 17 beide ebenfalls aus Aluminiumblech gefertigt.

Die Gehäusewände 32 bis 35a schützen nicht nur die Antriebskomponenten, wie beispielsweise die Batteriepakete 15, 16 und den Elektromotor 23, vor Fremdpartikeln, sondern leiten auch einen exemplarisch dargestellten Kraftfluss 37 zwischen den Tragmitteln der Trägerstruktur 2, also beispielsweise zwischen den Fußrasten 7, dem Sitz 5, der Aufnahme 14 und dem Lager 9a.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Motorrad
- 2: Trägerstruktur
- 3: Vorderradanordnung
- 4: Hinterradanordnung
- 5: Sitz
- 6: Raste
- 7: Gehäuse
- 8: Vorderrad
- 9: Vorderradlenker
- 10: Hinterrad
- 11: Hinterradschwinge
- 12: Stoßdämpfer
- 13: lange Seite
- 14: Ansatzpunkt
- 15: Batteriepaket
- 16: Batteriepaket
- 17: Winkel
- 18: Ende
- 19: Abschnitt
- 20: Abschnitt
- 21: Öffnung
- 22: Öffnung
- 22a: Hohlraum
- 23: Elektromotor
- 23a: Ende
- 24: Aufnahme
- 25: Anlenkpunkt
- 26: Öffnung
- 27: Lüfter
- 28: Öffnung
- 29: Luftstrom
- 29a: Ende
- 30: Öffnung
- 31: Öffnung
- 32: Gehäusewand
- 33: Gehäusewand
- 34: Gehäusewand
- 35: Gehäusewand
- 35a: Gehäusewand
- 36: Aufnahme
- 37: Kraftfluss

## Patentansprüche

1. Trägerstruktur (2) für ein einen Elektroantrieb (15, 16, 23) aufweisendes Motorrad (1), mit:
einem Gehäuse (7), welches Gehäusewände (32, 33, 34, 35, 35a) zur fremdpartikelgeschützten Aufnahme mindestens
einer Antriebskomponente (15, 16, 23) des Elektroantriebs aufweist; und
Tragmitteln (5, 6, 9a, 14) zum Tragen einer Vorderradanordnung (3), einer Hinterradanordnung (4) und eines Fahrers;
wobei die Gehäusewände (32, 33, 34, 35, 35a) des Gehäuses (7) zum Leiten eines Kraftflusses (37) zwischen den Tragmitteln (5, 6, 9a, 14) ausgebildet sind.

2. Trägerstruktur nach Anspruch 1,
**dadurch gekennzeichnet,**
**dass** eine als Batteriepaket (16) ausgebildete Antriebskomponente derart anordbar ist, dass sie mit einem ersten Abschnitt (19) zwischen den Gehäusewänden (32, 33, 34, 35, 35a) des Gehäuses (7) angeordnet ist und sich mit einem zweiten Abschnitt (20) durch eine Aussparung (21) in den Gehäusewänden (32, 33, 34, 35, 35a) des Gehäuses (7) unter ein als Sitz (5) ausgebildetes Tragmittel für den Fahrer erstreckt.

3. Trägerstruktur nach Anspruch 2,
**dadurch gekennzeichnet,**
**dass** der Sitz (5) einen Hohlraum (22a) aufweist, in welchen sich das Batteriepaket (16) erstreckt.

4. Trägerstruktur nach wenigstens einem der vorhergehenden Ansprüche,
**dadurch gekennzeichnet,**
**dass** eine weitere, als Batteriepaket (15) ausgebildete Antriebskomponente vollständig von den Gehäusewänden (32, 33, 34, 35, 35a) des Gehäuses (7) umgeben aufnehmbar ist.

5. Trägerstruktur nach wenigstens einem der vorhergehenden Ansprüche,
**dadurch gekennzeichnet,**
**dass** der Sitz (5) abnehmbar und/oder verschwenkbar an dem Gehäuse (7) angebracht ist, wobei ein Zugang zu dem Batteriepaket (16) und/oder dem weiteren Batteriepaket (15) freigebbar ist.

6. Trägerstruktur nach wenigstens einem der vorhergehenden Ansprüche,
**dadurch gekennzeichnet,**
**dass** das Gehäuse (7) an einem ersten Ende (23a) im Bereich des Tragmittels (9A) für die Vorderradanordnung (3) eine erste Öffnung (26) und/oder an einem zweiten Ende (29a) im Bereich des Tragmittels (14) für die Hinterradanordnung (4), vorzugsweise im Bereich einer Aufnahme (24) für eine als Elektromotor (23) ausgebildete Antriebskomponente, eine zweite Öffnung (28) aufweist,
wobei vorzugsweise ein Lüfter (27) vorgesehen ist, mittels welchem ein Luftstrom (29) durch die erste Öffnung (26) und/oder durch die zweite Öffnung (28) und/oder von der ersten zu der zweiten Öffnung (26; 28) erzeugbar ist.

7. Trägerstruktur nach wenigstens einem der vorhergehenden Ansprüche,
**dadurch gekennzeichnet,**
**dass** das Gehäuse (7) in etwa die äußere Gestalt eines rechtwinkeligen Dreieckszylinders aufweist, wobei die Tragmittel (9a; 14) für die Vorderrad- und Hinterradanordnung an in etwa gegenüberliegenden Enden (23A, 29A) einer Seite (13) vorgesehen sind, welche der Hypotenuse des Dreieckszylinders zugeordnet ist.

8. Trägerstruktur nach wenigstens einem der vorhergehenden Ansprüche,
**dadurch gekennzeichnet,**
**dass** sich der Sitz (5) von in etwa dem Ende (23A) der Seite (13), welche der Hypotenuse des Dreieckszylinders zugeordnet ist, zu in etwa der Mitte dieser Seite (13) erstreckt und an dieser angebracht ist.

9. Trägerstruktur nach wenigstens einem der vorhergehenden Ansprüche,
**dadurch gekennzeichnet,**
**dass** ein als Fußrasten (6) ausgebildetes Tragmittel für den Fahrer an dem Ende (29A) des Dreieckszylinders vorgesehen ist, welches der Hinterradanordnung (4) zugeordnet ist.

10. Trägerstruktur nach wenigstens einem der vorhergehenden Ansprüche,
**dadurch gekennzeichnet,**
**dass** eine als Elektromotor (23) ausgebildete Antriebskomponente wenigstens teilweise innerhalb des Endes (29A) des Dreieckszylinders vorgesehen ist, welches der Hinterradanordnung (4) zugeordnet ist.

11. Trägerstruktur nach wenigstens einem der vorhergehenden Ansprüche,
**dadurch gekennzeichnet,**
**dass** die Tragmittel für die Hinterradanordnung (4) ein Lager für die Hinterradschwinge (11) und/oder einen Ansatzpunkt (14) für einen Stoßdämpfer (12) und/oder die Tragmittel für die Vorderradanordnung (3) ein Lager (9A) für einen Vorderradlenker (9) aufweist.

12. Trägerstruktur nach wenigstens einem der vorhergehenden Ansprüche,
**dadurch gekennzeichnet,**
**dass** die Gehäusewände (32, 33, 34, 35, 35a) des Gehäuses (7) aus mehreren miteinander verbundenen, insbesondere zusammengeschweißten, Blechen ausgebildet sind.

13. Trägerstruktur nach wenigstens einem der vorhergehenden Ansprüche,
**dadurch gekennzeichnet, dass** die Gehäusewände (32, 33, 34, 35, 35a) des Gehäuses (7) aus einem Kunststoff, insbesondere einem Faserverbundwerkstoff, ausgebildet sind.

14. Motorrad (1), mit einer Trägerstruktur (2) nach wenigtens einem der vorhergehenden Ansprüche.
